# EUROPEAN PATENT APPLICATION

(11) **EP 4 422 039 A2**
(43) Date of publication of application: **28.08.2024**
(21) Application number: 24158335.0
(22) Date of filing: 19.02.2024
(51) Int. Cl.: H02K 3/52

(54) **WEDGING ARRANGEMENT**

(30) Priority: 23.02.2023 GB 202302636
(71) Applicant: Cummins Generator Technologies Limited, Peterborough PE2 6FZ (GB)
(72) Inventor: Bell, Adrian, Peterborough, PE2 6FZ (GB); Dowdall, Jerry, Peterborough, PE2 6FZ (GB)
(74) Representative: CSY London

(57) **Abstract**

A wedging arrangement for a rotating electrical machine is disclosed. The wedging arrangement comprises a wedge (30) for retaining rotor windings, the wedge comprising an outer surface (34) arranged to face the windings. A layer of insulating material (36) is provided for insulating the wedge from the windings. The layer of insulating material comprises at least one portion (38) folded so as to expose a surface of the windings. This increases the area of windings exposed to cooling air flow, thus improving the cooling of the machine.

## Description

The present invention relates to a wedging arrangement for retaining rotor windings in a rotating electrical machine, and in particular a wedging arrangement comprising a wedge and a layer of insulating material.

Rotating electrical machines generally comprise a rotor and a stator with an air gap between the two. The rotor is provided with rotor windings in order to develop a magnetic flux in the air gap. The stator is provided with stator windings which intersect the magnetic flux. In the case of a generator, when the rotor is rotated by a prime mover, the rotating magnetic field results in an electrical current flowing in the stator windings, thereby generating an electrical output. In the case of a motor, an electrical current is supplied to the stator windings and the thus generated magnetic field causes the rotor to rotate.

In operation, losses may occur due to, for example, resistance in the windings an in losses in the pole body. These losses result in heat being created within the machine. Therefore, many machines include a fan for forcing air flow through the machine to provide cooling. The air flow through the machine is generally in an axial direction. The air flow may come into contact with the surface of the rotor windings, thus providing cooling.

In a salient pole machine, as the rotor rotates, centrifugal forces develop on the windings, which tends to force the windings outwards in a radial direction. For this reason, many salient pole machines have pole shoes at the pole tip. The pole shoes overlap the rotor windings and thus retain the windings against the centrifugal forces in the radial direction as the rotor rotates.

In a salient pole machine, forces will also develop on the windings in a circumferential direction as the rotor rotates. In order to counteract such forces, it is known to provide a wedge between the windings of adjacent poles. The wedge is bridged between the pole shoes and presses against the windings on either side in a circumferential direction so as to retain the windings in place.

In order to prevent the wedges from conducting electrical current from the windings, an insulating layer may be provided between the wedge and windings. In a typical machine, the insulation material is provided on the windings and then the wedges are installed in place.

A problem with the convention wedging arrangement is that, in order to comply with clearance and creepage requirements as well as manufacturing and installation tolerances, the insulation material may cover a relatively large proportion of the surface area of the rotor windings. This may result in a reduction in machine cooling and therefore overall machine performance.

It would therefore be desirable to provide a wedging arrangement which improves cooling. In addition, it would be desirable to provide a wedging arrangement which is relatively simple to install.

According to one aspect of the present invention there is provided a wedging arrangement for a rotating electrical machine comprising:
a wedge for retaining rotor windings, the wedge comprising an outer surface arranged to face the windings; and
a layer of insulating material for insulating the wedge from the windings;
wherein the layer of insulating material comprises at least one portion folded so as to expose a surface of the windings.

The present invention may provide the advantage that creepage and clearance requirements may be met whilst reducing the surface area of windings covered by the wedging arrangement. By reducing the area of the windings covered by the wedging arrangement, the area of windings exposed to cooling air flow may be increased. This may improve cooling of the machine.

Preferably the layer of insulating material is arranged to cover the whole of the outer surface. Preferably, the layer of insulating material has an area which is greater than the area of the outer surface.

The layer of insulating material is preferably folded along an edge of the outer with or parallel to an edge of the outer surface. This may help to maximise the surface of the windings which are exposed.

The layer of insulating material is preferably folded away from the outer surface. Thus, the folded portion preferably extends at least partially in a direction which is opposite to the direction in which the outer surface faces.

The layer of insulating material may comprise a pair of folded portions. For example, the layer of insulating material may comprise a first folded portion folded along a first edge of the outer surface and a second folded portion folded along a second, opposite edge of the outer surface. For example, the layer of insulating material may have a generally U-shaped profile. This may help to further reduce the surface area of the windings to be covered by the wedging arrangement.

In some embodiments, the first folded portion and the second folded portion are arranged such that the layer of insulating material grips the wedge. In this case, the layer of insulating material may grip the wedge sufficiently for it to be retained on the wedge during assembly of the wedging arrangement. For example, the wedge may comprise at least one side surface at an angle to the outer surface, and the folded portion may be folded at an angle greater than the angle between the outer surface and the side surface prior to installation of the layer of insulating material on the wedge. This may allow the wedge and the layer of insulating material to be held together during installation on a rotor.

Alternatively, the folded portion could be folded at an angle approximately equal to (or less than) the angle between the outer surface and the side surface. In any case, if desired, the layer of insulating material could be attached to the wedge, for example, using an adhesive or any other appropriate fixing means.

In some embodiments, the wedge comprises a chamfer along at least one edge of the outer surface. The chamfer may be for example along a third edge which runs between the first edge and the second edge of the wedge. The chamfer may incline away from the direction in which the outer surface faces, that is, away from the windings, thus increasing clearance. This may reduce the area of windings that is covered at a distal end (radially outwards) of the wedge and may help to meet creepage and clearance requirements.

Alternatively or in addition, the layer of insulating material may comprise a further folded portion at a distal end of the wedge. In order to achieve this, the layer of insulating material may comprise a cut or cutout part, for example, at one or more corners.

The wedge may comprise a first outer surface arranged to face a first set of rotor windings and a second outer surface arranged to face a second set of rotor windings. For example, the wedge may comprise a first support member with the first outer surface and a second support member with the second outer surface. The first and second support members may be connected by a connecting means. The first and second support members may be separate parts and may be connected by, for example, a stud. Alternatively, the first and second support members may be a single piece connected by a joint such as a bend.

In some embodiments, the first and/or second support member may comprise a first chamfer at one end and a second chamfer at another (opposite) end. For example, a chamfer could be provided on either or both of a radially inwards and a radially outwards end of the support member. This may reduce the need to fold the layer of insulating material which may reduce manufacturing complexity. Alternatively or in addition, a folded portion could be provided at either or both ends of the support member.

The layer of insulating material may comprise a first part arranged to cover the first outer surface and a second part arranged to cover the second outer surface. Preferably, the first part comprises a first pair of folded portions and the second part comprises a second pair of folded portions. The first and second parts may be part of the same piece. In this case, the layer of insulating material may be folded to form the two parts. A single piece may provide the advantage that locating the layer of insulating material wedge is simpler. However, folding a single piece to cover both support members may be more complex. Therefore, in alternative embodiments, the first and second parts may be separate pieces.

In the above embodiments, the creepage and clearance distances are preferably at least 0.5 mm, 1 mm or 2mm. The creepage and clearance distances are also preferably less than 20 mm. More preferably the creepage and clearance distances may be less than 15, 10 or even 5 mm, although other values may be used instead

The layer of insulating material preferably comprises electrical insulation paper. The electrical insulation paper may be made from any suitable material, such as a polymer, for example a meta-aramid or polyester.

According to another aspect of the present invention there is provided a rotor for a rotating electrical machine, the rotor comprising:
a plurality of salient poles;
rotor windings on each of the salient poles; and
at least one wedging arrangement in any of the forms described above between the rotor windings of two adjacent salient poles.

The folded portion preferably extends away from the rotor windings. The folded portion is preferably folded along an edge of the outer surface which is substantially perpendicular to the direction of the rotor windings. The folded portion is preferably folded along an edge of the outer surface which extends in a substantially radial direction.

Where the layer of insulating material comprises a first folded portion and a second folded portion, both folded portions preferably extend away from the rotor windings. Each folded portion is preferably folded along an edge of the outer surface which is substantially perpendicular to the direction of the rotor windings. Each folded portion is preferably folded along an edge of the outer surface which extends in a substantially radial direction. The folded portions may be on opposite sides of the wedge. For example, the folded portions may be folded along axially spaced edges of the outer surface, and said edges may extend in a substantially radial direction.

Preferably the wedging arrangement comprises one or more chamfer along an axially extending edge of the outer surface. The one or more chamfers may be provided on radially distal edges of the outer surface. This may reduce the area of windings that is covered at the radially distal ends may help to meet creepage and clearance requirements.

An area of contact between the layer of insulating material and the rotor windings is preferably approximately equal to an area of the outer surface.

Preferably a plurality of wedging arrangements are provided between the rotor windings of two adjacent salient poles at spaced locations in an axial direction through the rotor. In this case, the rotor windings are preferably exposed (not covered by the layer of insulating material) for the majority of or substantially the whole distance in an axial direction between two adjacent wedges.

The total exposed axial length of the windings is preferably greater than the total axial length of the windings minus the unfolded axial length of the layer of insulating material.

According to a further aspect of the present invention, there is provided a method of manufacturing a wedging arrangement for a rotating electrical machine, the method comprising:
providing a wedge for retaining rotor windings, the wedge comprising an outer surface arranged to face the windings;
folding a layer of insulating material to produce at least one folded portion; and
installing the layer of insulating material on the wedge such that the layer of insulating material will insulate the outer surface from the rotor windings, and the folded portion will expose a surface of the rotor windings.

The layer of insulating material may be folded to produce two folded portions. The step of folding the layer of insulating material may comprise folding the layer of insulating material at an angle greater than an angle between the outer surface and a side surface of the wedge. In some embodiments, this may involve folding the insulation means at an angle of greater than 90 degrees. This may provide the advantage that the insulating material may tend to grip the wedge.

The method may further comprise installing the wedging arrangement on a rotor of a rotating electrical machine such that the layer of insulating material insulates the outer surface from the rotor windings and the folded portion or portions expose a surface of the rotor windings.

In one embodiment of the present invention, the layer of insulating material may be fitted over the wedge forming a wedge arrangement before the wedge arrangement is installed in the rotor. This may provide the advantage that the wedge is more easily fitted on the insulation material, thus reducing manufacturing tolerances and complexity.

In alternative embodiments, the layer of insulating material may be installed in the rotor before the wedge is fitted on the layer of insulating material.

Features of one embodiment may be used in combination with any other embodiment. Any of the apparatus features may be provided as method features and vice versa.

In this specification terms such as "axially", "radially", "circumferentially" and so forth are generally used with respect to the axis of rotation of the rotating electrical machine.

Preferred features of the present disclosure will now be described, purely by way of example, with reference to the accompanying drawings, in which:
Figure 1 shows a rotor arrangement;
Figure 2 shows a wedging arrangement;
Figure 3 shows a wedging arrangement according to one embodiment of the present invention;
Figure 4 shows a layer of insulating material according to another embodiment of the present invention;
Figure 5A shows a wedge according to a further embodiment of the present invention;
Figure 5B shows an in-depth view of a wedge according to a further embodiment of the present invention;
Figure 6 shows a rotor arrangement according to a further embodiment of the present invention;
Figure 7 shows a detailed view of a rotor arrangement according to an embodiment the present invention; and
Figure 8 shows an alternative wedge according to another embodiment of the present invention.

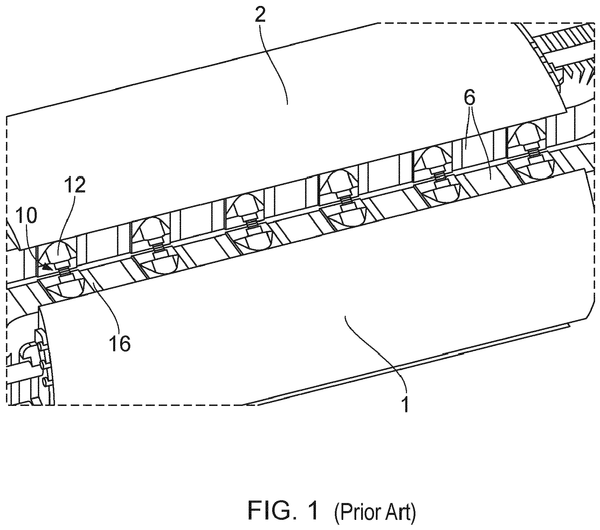

Figure 1 shows part of a rotor of a typical rotating electrical machine. The rotor is designed to rotate inside a stator (not shown). The rotor comprises a rotor body 2 located on a rotor shaft (not shown) the centre of which defines the axis of rotation of the machine. The rotor comprises a plurality of salient poles 4 which extend outwards in a radial direction. The rotor shown in Figure 1 has four poles; however, other numbers of poles are possible. Each of the poles 4 carries rotor windings 6 which are usually in the form of coils of copper wires. An electrical current flowing in these windings causes a magnetic flux to flow radially across the airgap between the rotor and the stator.

In operation, cooling airflow passes through the inter-polar gaps. The cooling air flow is forced through by a rotor fan (not shown) and cools the rotor windings 6 through contact with the exposed surface of the windings.

The rotor of Figure 1 includes a plurality of wedging arrangements 10 provided between the windings of adjacent poles. The wedging arrangements 10 are designed to retain the windings against centrifugal and other forces while the machine is in operation. The rotor arrangement in Figure 1 has six wedging arrangements between a pair of adjacent poles, however any number of wedges may be used.

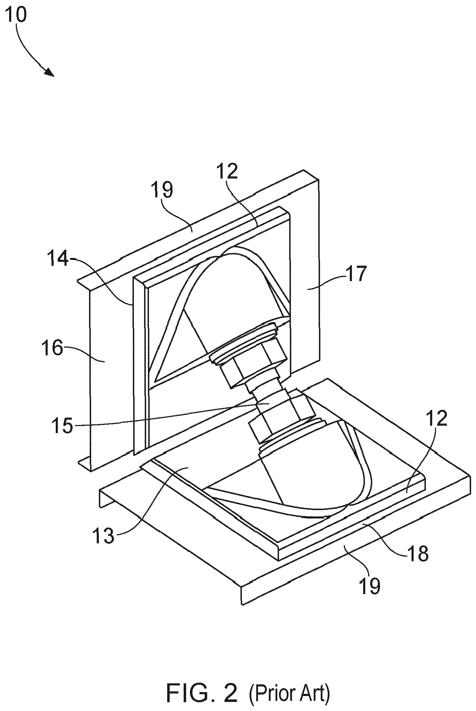

Figure 2 shows the wedging arrangement displayed in Figure 1 in detail. Referring to Figure 2, the wedging arrangement 10 comprises a wedge comprising a pair of support members 12 spaced apart circumferentially. Each support member comprises an inner surface 13 and an outer surface 14. The inner surfaces of the pair of support members 12 are arranged circumferentially between the pair of support members 12. The outer surfaces 14 are arranged to face and abut the windings 6 along most or all of their surface. The pair of support surfaces 12 are urged apart by a stud arrangement 15 connecting the pair of support member inner faces 13.

The wedging arrangement further comprises a layer of insulating paper 16 arranged to cover each of the support member outer surfaces 14. The insulation paper 16 has a significantly larger surface area than the support member outer face 14 such that the insulation paper 16 has side overhanging portions 17 either side of the support member 12 as well as an end overhanging portion 18 at a radially distal end of the support member 12. The insulation paper 16 further comprises a folded portion 19. The folded portion 19 is folded away from the support member 12 such as to fold towards the windings 6 of the electrical machine.

The side overhanging portion 17 of the insulation paper 16 may be substantial so as to meet creepage and clearance requirements. For a working voltage of 400 V in a typical rotating machine, the creepage and clearance requirement are approximately 20 mm. As such the length of the side overhanging portions 17 either side of the support members 12 is at least 20 mm. Similarly, the length of the end overhanging portion 18 along with the folded portion 19 sums to at least 20 mm.

When assembling the wedging arrangement 10 into an electrical machine, the insulation paper 16 is first installed over the windings 6 and then the wedge is installed over the insulation paper 16. It is difficult to locate the wedge at the exact midpoint of the insulation paper 16. As such, a further tolerance should be accounted for in the overhanging portions, especially the side overhanging portions. This results in a large insulation paper which covers a far larger surface of the windings than the external support surfaces 14.

The large insulation paper results in a relatively small surface of the windings being exposed to cooling air flow. As such the cooling efficiency of the machine is reduced.

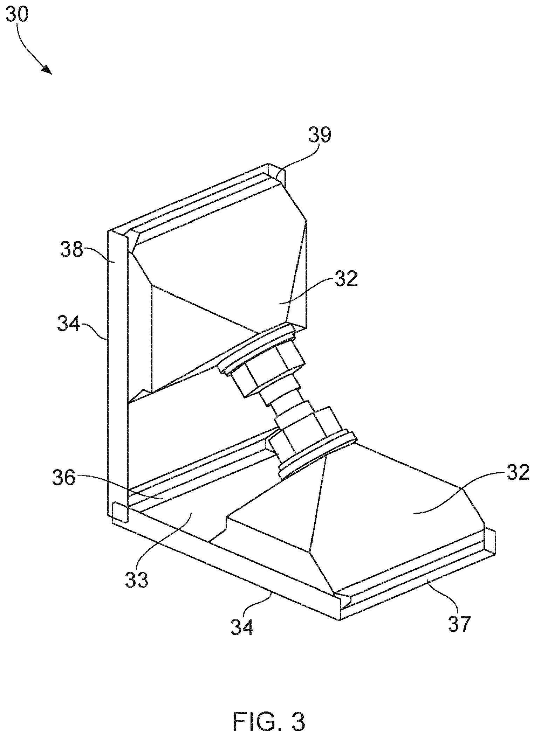

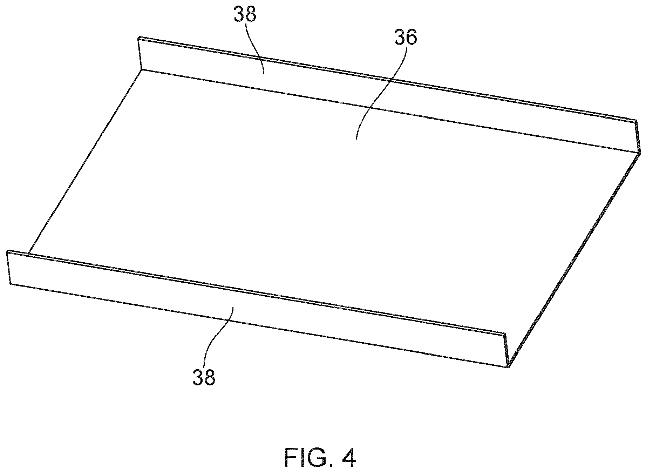

Figures 3 and 4 show features of one embodiment of the present invention. Specifically Figure 3 shows a wedging arrangement and Figure 4 shows a layer of insulation paper according to one embodiment of the present invention. Referring to Figure 3, the wedging arrangement comprises a pair of support members 32 spaced apart circumferentially. Each support member comprises an inner surface 33 and an outer surface 34. The support member further comprises a pair of side surfaces 39 spanning between the inner surface 33 and the outer surface 34. The inner surfaces of the pair of support members 32 are arranged circumferentially between the pair of support members 32. The outer surfaces 34 are arranged to abut the windings along most or all of their face. The side surfaces 39 are arranged to be substantially parallel to a radial direction. The pair of support surfaces 32 are urged apart by an urging member 35 connecting the pair of support member inner faces 33.

The wedging arrangement further comprises electrical insulation paper 36 arranged to cover each of the support member outer surfaces 34. The insulation paper may be made, for example, of a polymer, such as a meta-aramid or polyester. The insulation paper 36 comprises at least one folded portion 38 folded along at least one of the first and second side surfaces 39. The folded portion 38 is folded along the edge of the wedge towards the inner surface 33. The folded portion 38 is preferably arranged to span substantially from the outer surface 34 to the inner surface 33. The insulation paper is shown in isolation in Figure 4.

By providing a folded portion 38 folded towards the inner surface 33 the insulation paper is arranged to wrap around the support member 32 spanning substantially from the outer surface 34 to the inner surface 33 the wedging arrangement shown in Figure 3 may meet creepage and clearance requirements whilst minimising the surface area of the windings covered by the wedging arrangement. This may improve cooling.

The insulation paper 36 is folded using conventional folding techniques, for example, using a paper folding machine. Paper folding machines are known in the art, and thus are not described further.

The insulating paper 36 may be folded at an angle approximately equal to the angle at which the side surface 39 meets the outer surface 34. However, the insulation paper 36 is preferably folded at an angle greater than the angle at which the side surface 39 meets the outer surface 34. By folding at an angle greater than the angle at which the side surface 39 meets the outer surface 34, the insulation paper 36 may grip the support members 32.

In the embodiment shown in Figure 3, the side surface 39 meets the outer surface 34 at approximately 90 degrees. In this instance, the insulation paper may be folded at approximately 95 degrees, for example, however other angles are also suitable. In other embodiments of the present invention, the angle between the side surface 39 and the outer surface 34 may be different to 90 degrees. Whilst over-bending the insulation paper may allow the insulation paper to grip the wedge, in some embodiments the insulation paper 36 may be permanently fixed to the outer surface 34 and need not be over-bent. In some embodiments, the insulation paper 36 is glued to the outer surface 34.

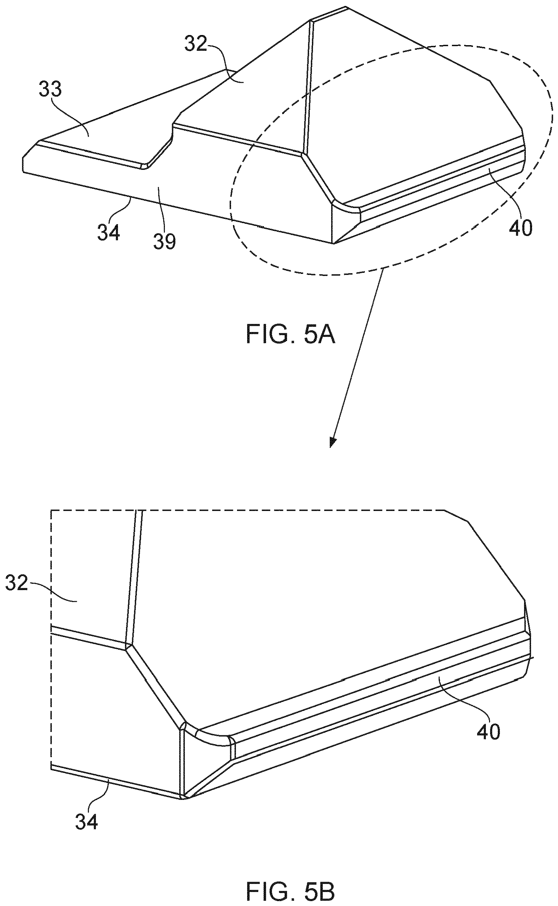

Referring now to Figure 5A and 5B, the support member 32 may further comprise a chamfer 40 at a radially distal end. The chamfer 40 inclines towards the inner surface 33, that is to say away from the outer surface 34. The chamfer 40 is arranged to increase the clearance between the support member 32 and the windings of the electric machine. In some embodiments the chamfer 40 ensures that the clearance between the support member 32 and the windings is at least 1 mm at the radially distal end of the support member 32. As an alternative, the insulation paper 36 may comprise a further folded portion arranged to wrap around the radially distal edge of the support member 32.

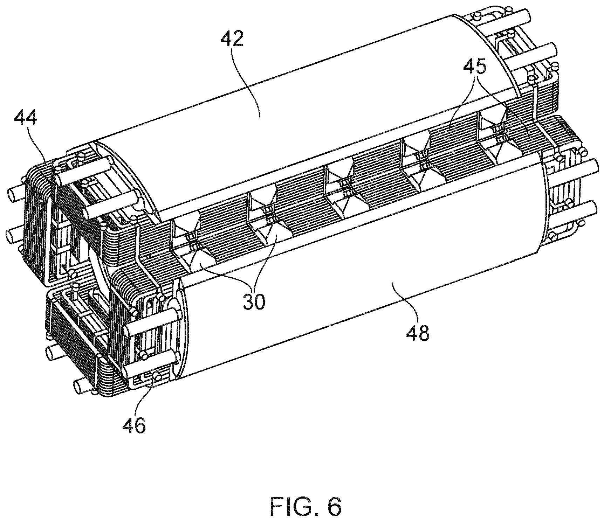

Figure 6 shows the rotor of an electrical machine according to an embodiment of the present invention. Referring to Figure 6, the rotor is of a salient pole design with four poles; however, other numbers of poles are possible, for example six or eight. Each of the poles 42, 44, 46, 48 has rotor windings 45 wound around it. The windings 45 comprise side windings which extend in an axial direction and end windings which extend in a tangential direction. Cooling air flow is arranged to pass through the rotor in an axial direction, forced by a fan (not shown). The air flow passes through the inter-pole gaps and thus contacts the exposed surface of the windings 45.

The rotor includes a plurality of wedging arrangements 30 located in the inter-pole gap between adjacent poles 42 and 48. The wedging arrangements 30 are arranged to retain the side windings 45 wrapped around poles 42 and 48. The wedging arrangements 30 displayed in Figure 6 are substantially the same as those described in detail with reference to Figures 3 to 5. Whilst there are five wedging arrangements 30 shown in Figure 6, other numbers of wedging arrangements 30 could be provided.

As will be appreciated, the wedging arrangements 30 displayed in Figure 6 expose a larger surface area of the windings 45 compared to those known in the prior art and displayed in Figure 1.

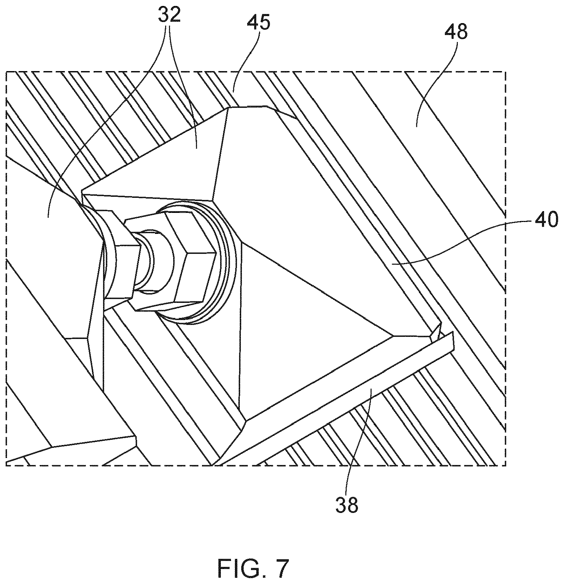

Figure 7 shows a close view of a wedging arrangement according to one embodiment of the present invention in place in the rotor of an electrical machine. Referring to Figure 7, the wedging arrangement is located between adjacent poles. The outer surfaces 34 of each of the support members 32 are arranged to face the windings 45. The insulation paper 36 covers the outer surface 34 of each support member 32, sitting between the outer surface 34 and the windings 45. The insulation paper features a folded portion 38 such that the insulation paper 36 wraps around the support member 32. The support member 32 has a chamfer 40 at a radially distal end. The chamfer 40 inclines away from the windings 44 such as to increase the clearance therebetween.

By folding the insulation paper 36 around the support members 32 as described above, the creepage and clearance distances may meet industry requirements whilst maximising the surface area of the windings which are exposed to cooling air flow. As will be appreciated upon inspection of Figures 6 and 7, the insulation paper 36 covers substantially the same area of the windings 45 as the outer surface 34 of the support members 32.

In typical 400 V electric machines, the creepage and clearance requirements are thought to be approximately 20 mm. While testing the present invention, it was found that in a typical 400V electric machine, the voltage on the edge windings is actually closer to 50V or 60V, contrary to traditional thinking. The edge windings represent the position where a spark from the windings to the wedge are most likely. As a result, the most insulation is required between the wedge and the edge winding.

As a consequence of the above discovery, the amount of insulation required may be significantly lower than previously thought. As such, the wedging arrangements shown in Figures 1 and 2 and in particular the insulation paper may be unnecessarily large and may cause undue adverse effects on machine cooling. However, if the insulation paper were merely reduced in size, the difficulties in installing the wedge onto the paper could mean that the creepage and clearance requirements are not met due to incorrect installation. The provision of at least one folded portion in the insulation paper addresses these issues.

During manufacturing, the insulation paper 36 is folded using conventional means and then mounted on the support members 32 in such a way as to cover the outer surfaces 34 as described above. In some embodiments of the present invention, the insulation paper 36 is mounted on the wedge before the wedge is installed into the rotor. This reduces the complexity of accurately mounting the wedge on the insulation paper 36.

In alternative embodiments, the insulation paper 36 is folded and installed on the rotor and then the wedge is mounted over the insulation paper 36.

Whilst the embodiments described in relation to Figures 3 to 5 show a single insulation paper 36, other embodiments of the present invention may have two or more pieces of insulation paper. In one such embodiment, the insulation paper may comprise two pieces. The first piece is arranged to cover the external surface of the first support member and the second piece is arranged to cover the external surface of the second support member.

Furthermore, whilst the embodiments described in Figures 3 to 5 show folded portions covering each of the four side surfaces and the end surfaces, other embodiments may have fewer folded portions. Some embodiments may have only one folded portion, whilst others may have two or three. Having fewer folded portions may still allow a greater area of the windings to be exposed to cooling air flow compared to known wedging arrangements, thus still reaping at least some of the benefits of the present invention.

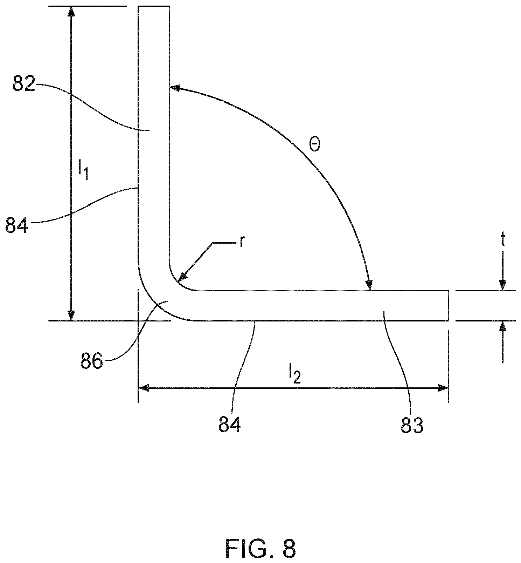

The embodiments of the invention described above with reference to Figures 3 to 7 all include a similar wedge component. However, the present invention is equally applicable with other wedges. Figure 8 shows an alternative wedge which may be used with the present invention. Referring to Figure 8, the wedge 80 comprises a first support member 82 and a second support member 83 arranged substantially in an L-shape joining at angled section 86. The support members 82, 83 may be joined by a crossbeam (not shown). The wedge 80 may also have any of the features described in GB2203817.8, the entire contents of which are included herein by reference.

Each of the support members 82, 83 have an outer surface 84 which faces the windings of a rotor when in use, similar to the embodiments described above. The outer surfaces 84 of the wedge 80 are covered by a layer of insulating paper substantially as described in reference to Figure 4. The first outer surface has a first layer of insulating paper (not shown) and the second outer surface has a second layer of insulation paper (not shown). The insulation paper has folded portions folded away from the outer surface.

It will be appreciated that preferred features of the disclosure have been described above by way of example only, and that variations in detail may be made within the scope of the appended claims.

## Claims

1. A wedging arrangement for a rotating electrical machine comprising:
a wedge for retaining rotor windings, the wedge comprising an outer surface arranged to face the windings; and
a layer of insulating material for insulating the wedge from the windings;
wherein the layer of insulating material comprises at least one portion folded so as to expose a surface of the windings.

2. A wedging arrangement according to claim 1, wherein the layer of insulating material is folded along an edge of the outer surface.

3. A wedging arrangement according to any of the preceding claims, wherein the layer of insulating material comprises a first folded portion folded along a first edge of the outer surface and a second folded portion folded along a second, opposite edge of the outer surface.

4. A wedging arrangement according to claim 3, wherein the layer of insulating material has a generally U-shaped profile.

5. A wedging arrangement according to claim 3 or 4, wherein the first folded portion and the second folded portion are arranged such that the layer of insulating material grips the wedge.

6. A wedging arrangement according to any of the preceding claims, wherein the wedge comprises at least one side surface at an angle to the outer surface, and the folded portion is folded at an angle greater than the angle between the outer surface and the side surface prior to installation of the layer of insulating material on the wedge.

7. A wedging arrangement according to any of claims 4 to 6 when dependent on claim 3, wherein the wedge comprises a chamfer along a third edge which runs between the first edge and the second edge.

8. A wedging arrangement according to any of the preceding claims, wherein the wedge comprises a first outer surface arranged to face a first set of rotor windings and a second outer surface arranged to face a second set of rotor windings, and the layer of insulating material comprises a first part arranged to cover the first outer surface and a second part arranged to cover the second outer surface.

9. A rotor for a rotating electrical machine, the rotor comprising:
a plurality of salient poles;
rotor windings on each of the salient poles; and
at least one wedging arrangement according to any of the preceding claims between the rotor windings of two adjacent salient poles.

10. A rotor according to claim 9, wherein the folded portion extends away from the rotor windings.

11. A rotor according to claim 9 or 10, wherein the folded portion is folded along an edge of the outer surface which is substantially perpendicular to the direction of the rotor windings and/or which extends in a substantially radial direction.

12. A rotor according to any of claims 9 to 11, wherein the layer of insulating material comprises a first folded portion and a second folded portion, and both folded portions extend away from the rotor windings.

13. A rotor according to any of claims 9 to 12, wherein an area of contact between the layer of insulating material and the rotor windings is approximately equal to an area of the outer surface.

14. A rotor according to any of claims 9 to 13, wherein a plurality of wedging arrangements are provided between the rotor windings of two adjacent salient poles at spaced locations in an axial direction through the rotor, and the rotor windings are exposed for substantially the whole distance in an axial direction between two adjacent wedges.

15. A method of manufacturing a wedging arrangement for a rotating electrical machine, the method comprising:
providing a wedge for retaining rotor windings, the wedge comprising an outer surface arranged to face the windings;
folding a layer of insulating material to produce at least one folded portion; and
installing the layer of insulating material on the wedge such that the layer of insulating material will insulate the outer surface from the rotor windings, and the folded portion will expose a surface of the rotor windings.
